Europäisches Patentamt

European Patent Office

Office européen des brevets

(11) Veröffentlichungsnummer: **0 014 247**
**B1**

(12) **EUROPÄISCHE PATENTSCHRIFT**

(45) Veröffentlichungstag der Patentschrift:
**09.02.83**

(51) Int. Cl.³: **E 03 C 1/33**, A 47 B 77/06

(21) Anmeldenummer: **79105038.8**

(22) Anmeldetag: **10.12.79**

(54) Einrichtungseinheit aus einer einen Ausschnitt aufweisenden Platte und einem in den Plattenausschnitt eingesetzten Einbauelement, wie z.B. einer Einbauspüle, und Verfahren zur Herstellung der Einrichtungseinheit.

(30) Priorität: **28.12.78 DE 2856461**

(43) Veröffentlichungstag der Anmeldung:
**20.08.80 Patentblatt 80/17**

(45) Bekanntmachung des Hinweises auf die Patenterteilung:
**09.02.83 Patentblatt 83/6**

(84) Benannte Vertragsstaaten:
**CH IT NL SE**

(56) Entgegenhaltungen:
**DE-A-2 426 720**
**LU-A-41 686**
**US-A-2 539 464**

(73) Patentinhaber: **Blanc GMBH + Co., Flehinger Strasse 59, D-7519 Oberderdingen 1 (DE)**

(72) Erfinder: **Eichhorn, Horst, Dipl.-Ing., Hölderlinstrasse 19, D-7129 Leonbronn (DE)**
Erfinder: **Mück, Manfred, Austrasse 19, D-7519 Kürnbach (DE)**
Erfinder: **Schütz, Fredi, Obere Zelglistrasse 9, CH-8600 Dübendorf (CH)**
Erfinder: **Hero, Franz, Im Tobel 21, CH-8340 Hinwil (CH)**

(74) Vertreter: **Hoeger, Stellrecht & Partner Patentanwälte, Uhlandstrasse 14 c, D-7000 Stuttgart 1 (DE)**

Einrichtungseinheit aus einer einen Auschnitt aufweisenden Platte und einem in den Plattenausschnitt einge-setzten Einbauelement, wie z. B. einer Einbauspüle, und Verfahren zur Herstellung der Einrichtungseinheit

Die Erfindung betrifft eine Einrichtungseinheit aus einer Platte und einem Einbauelement wie einer Einbauspüle, einer Herdmulde oder dergleichen, wobei die Platte einen der Form des Einbauelements angepaßten Ausschnitt aufweist, in den das Einbauelement einsetzbar ist.

Es sind schon die verschiedensten Einbauarten für derartige Einbauelemente bekanntgeworden; bei den meisten wird der Rand des Einbauelements auf die Platte aufgesetzt, so daß er deren Ausschnittrand übergreift, und der Sicherung des Einbauelements im Plattenausschnitt dienen an der Unterseite des Rands des Einbauelements befestigte Spannelemente, die an der Plattenunterseite angreifen. Diese Einbauart ist verhältnismäßig aufwendig, da sie besondere Befestigungselemente sowie deren Befestigung am Einbauelement erforderlich macht. Es ist ferner bekannt, Einbauspülen in Plattenausschnitte einzukleben, was aber den Nachteil mit sich bringt, daß das Einbauelement nur schwer ausgebaut werden kann, wobei sich Beschädigungen der Platte und/oder des Einbauelements nicht vermeiden lassen.

Es ist schließlich eine Einrichtungseinheit der eingangs erwähnten Art bekanntgeworden (DE-A-2 426 720), bei der am Ausschnittrand eine extrudierte Kunststoffleiste dadurch befestigt wird, daß in einen Spalt zwischen der Kunststoffleiste und dem Ausschnittrand eine Kunststoff-Vergußmasse gegeben wird, um die Kunststoffleiste mit dem Ausschnittrand zu verkleben. Die Leiste besitzt einen im Querschnitt L-förmigen Ansatz und bildet mit diesem eine nach oben offene Rinne, in die der nach außen und dann nach unten abgebogene Rand des Einbauelements eingesetzt wird. Zur Abdichtung benötigt man einen gesonderten Dichtungsstreifen, der in die Rinne der Kunststoffleiste eingelegt wird und auf dem sich der Rand des Einbauelements abstützt. Diese bekannte Einbauart ist relativ aufwendig und deshalb teuer, denn es muß nicht nur eine separate Tragleiste hergestellt werden, sondern auch der erwähnte Dichtungsstreifen, und außerdem sind besondere Vorrichtungen erforderlich, um die Tragleiste an den Ausschnittrand der Platte anzukleben.

Der Erfindung lag deshalb die Aufgabe zugrunde, die aus der DE-A-2 426 720 bekanntgewordene Einbauart dahingehend zu verbessern, daß sie sich unter Beibehaltung des Vorteils, daß die Schnittkante der Platte am Ausschnittrand versiegelt wird, einfacher und billiger verwirklichen läßt.

Diese Aufgabe wird erfindungsgemäß dadurch gelöst, daß die Leiste samt Stützfläche für den Rand des Einbauelements aus einem gießbaren und in situ sich durch eine Polyreaktion verfestigenden Kunststoff gefertigt und durch diesen Kunststoff mit dem Ausschnittrand verklebt wird. Dadurch, daß die Leiste direkt an den Ausschnittrand angegossen wird, entfällt die Notwendigkeit für die Herstellung mehrerer separater Teile, und da genügend für diese Herstellungsart geeignete Kunststoffe wie z. B. Silikonkautschuk, Polyurethanschaum etc. zur Verfügung stehen, die auch die Eigenschaften eines Dichtungsmaterials besitzen, eröffnet die erfindungsgemäße Lösung die Möglichkeit, nicht nur eine Versiegelung der Schnittkante des Ausschnittrands zu erzielen, sondern auch eine Abdichtung des Spalts zwischen dem Rand des Einbauelements wie einer Einbauspüle und der dieses Einbauelement tragenden Platte.

Während bei der bekannten Einbauart nach der DE-A-2 426 720 für jede Seite des Plattenausschnitts ein Abschnitt der extrudierten Kunststoffleiste auf die richtige Länge zugeschnitten und dann an den Ausschnittrand angeklebt werden muß, bereitet es bei der erfindungsgemäßen Lösung, bei der die Leiste ja an den Ausschnittrand angegossen wird, keinerlei Probleme, sämtliche Seiten des Plattenausschnitts gleichzeitig mit der Leiste zu bestücken, so daß bei einer bevorzugten Ausführungsform der erfindungsgemäßen Einrichtungseinheit die Leiste einen um den Ausschnittrand umlaufenden, einteiligen Rahmen bildet.

Selbstverständlich würde es keine Schwierigkeiten bereiten, in den die Leiste bildenden Kunststoff geeignete Verstärkungselemente einzulegen, die Praxis hat jedoch gezeigt, daß dies gar nicht erforderlich ist, so daß eine Einrichtungseinheit zu bevorzugen ist, bei der die Leiste ausschließlich aus einem gießbaren Kunststoff besteht.

Als besonders zweckmäßig für die Herstellung der Leiste bzw. des Rahmens hat sich Polyurethanschaum erwiesen, weil dieser eine hohe Festigkeit aufweist und besonders gut an den üblicherweise für die Platten verwendeten Materialien haftet. Bevorzugt werden Platten, welche wenigstens eine Preßspan- oder Hartfaserschicht aufweisen, an deren ausschnittseitige Schnittkante der Rahmen angegossen wird, denn dann ergibt sich beim Angießen des Rahmens eine innige Verzahnung zwischen dem Plattenmaterial und dem Rahmenkunststoff, so daß die Verbindung eine hohe Festigkeit besitzt und das Einbauelement, wie beispielsweise eine Einbauspüle, ohne weiteres zu tragen imstande ist.

Bei der bekannten Einbauart nach der DE-A-2 426 720 wird das Einbauelement dadurch gegen ein Herausheben aus dem Plattenausschnitt nach oben gesichert, daß aus einem sich vom Randbereich nach unten erstreckenden Wandbereich des Einbauelements Nocken oder eine Sicke herausgeformt sind, die unter dem im Querschnitt L-förmigen Ansatz der Kunststoffleiste einrasten. Die bekannte Einbauart erfordert also ein elastisches Nachgeben des nach unten ragenden Wandbereichs des Einbauelements. Wegen der Steifigkeit der für Einbauspülen, Kochmulden und dergleichen verwendeten Edelstahlbleche ist diese Art der Verrastung wenig praktikabel. Deshalb wird vorgeschlagen, bei einer erfindungsgemäßen Einrichtungseinheit, bei der die Leiste eine Seitenwand mit einer Hinterschneidung zum Einrasten des Einbauelements aufweist, die Leiste aus einem derart elastischen Kunststoff zu fertigen,daß der die Hinterschneidung bildende Leistenbereich beim Einsetzen des Einbauelements elastisch nachgiebig ist; bei der erfindungsgemäßen Einrichtungseinheit muß also das Einbauelement zum Einrasten nicht deformiert werden.

Üblicherweise besitzen die Einbauelemente am Rand ihrer Oberseite eine Abrundung, d. h. einen Radius. Dann empfiehlt es sich, die Leiste mit einer elastischen Lippe zu versehen, die die von dem Radius gebildete Rundung des Einbauelements übergreift. Diese Lippe gewährleistet dann einen stufenlosen und nahezu fugenlosen Übergang von der Platte zum Einbauelement, zum anderen könnte die Lippe unter Umständen aber dazu dienen, das Einbauelement im Plattenausschnitt zu sichern.

Die auf die Leistenstützfläche von oben aufsetzbaren Stützen des Einbauelements können die Form von längs des Rands des Einbauelements im Abstand voneinander angeordneten Füßen haben; dies empfiehlt sich z. B. dann, wenn eine Glaskeramik-Herdmulde eingebaut werden soll, wobei dann an der Unterseite der Glaskeramikplatte z. B. umgekehrt L-förmige Stützen angeklebt werden. Die Stützen können aber auch die Form von langgestreckten, nach unten vorspringenden und insbesondere ebenfalls einen Rahmen bildenden Randpartien haben. Die Stützen könnten nun einfach so ausgerichtet sein, daß sie die Hinterschneidung der einen Seitenwand der Leisten hintergreifen. Bei einer bevorzugten Ausführungsform der Erfindung weisen die Stützen jedoch unter der Hinterschneidung einrastbare Vorsprünge auf, und diese Vorsprünge und/oder die erwähnte Seitenwand der Leiste werden zweckmäßigerweise so profiliert, daß sich beim Einsetzen des Einbauelements von oben wirksame Aufgleitflächen ergeben, um so den Einrastvorgang zu erleichtern.

Wie bereits angedeutet wurde, läßt sich die erfindungsgemäße Leiste dadurch besonders einfach herstellen und wirksam an der Ausschnittkante der Platte befestigen, daß die Leiste unter Verwendung eines Kunststoffs an den Ausschnittrand angegossen wird, wozu an die Platte im Bereich des Ausschnittrands eine Form angesetzt wird, deren Formraum der Leistenform entsprechend gestaltet ist. Um nicht mit Trennmitteln arbeiten zu müssen, welche die Gefahr mit sich bringen, daß Trennmittel auch an den Ausschnittrand gelangt und zu einer fehlerhaften Verbindung zwischen der Leiste und der Platte führt, empfiehlt es sich, für die Wand des Formraums einen Werkstoff zu verwenden, welcher bezüglich des Leistenkunststoffs selbsttrennend ist. Damit die Leiste leicht ausgeformt werden kann und nicht mit komplizierten Formen gearbeitet werden muß, wird für die Wand des Formraums zweckmäßigerweise ein elastischer Werkstoff verwendet, und zwar insbesondere ein Silikonkautschuk, welcher gleichzeitig die Eigenschaft mit sich bringt, daß die Wand des Formraums bezüglich fast aller für die Leistenherstellung in Frage kommender Kunststoffe selbsttrennend ist.

Weitere Merkmale, Vorteile und Einzelheiten der Erfindung ergeben sich aus den beigefügten Ansprüchen und/oder aus der nachfolgenden Beschreibung und der beigefügten zeichnerischen Darstellung zweier bevorzugter Ausführungsformen einer erfindungsgemäßen Einbauvorrichtung sowie einer Beschreibung des erfindungsgemäßen Verfahrens; es zeigt

Fig. 1 eine Draufsicht auf den Bereich einer Ecke einer in den Ausschnitt einer Tischplatte eingesetzten Einbauspüle,

Fig. 2 und 3 Schnitte durch die Einbauspüle und die Tischplatte nach den Linien 2-2 und 3-3 in Fig. 1,

Fig. 4 einen Schnitt durch einen Teil der Form und der Tischplatte nach dem Angießen der Leiste, wobei der Schnitt in den Bereich der Linie 2-2 in Fig. 1 gelegt wurde,

Fig. 5 einen der Fig. 4 entsprechenden Schnitt, jedoch im Bereich der Linie 3-3 in Fig. 1, und

Fig. 6 einen Schnitt entsprechend der Fig. 2, jedoch bei einer in den Ausschnitt einer Platte eingesetzten Glaskeramik-Herdmulde.

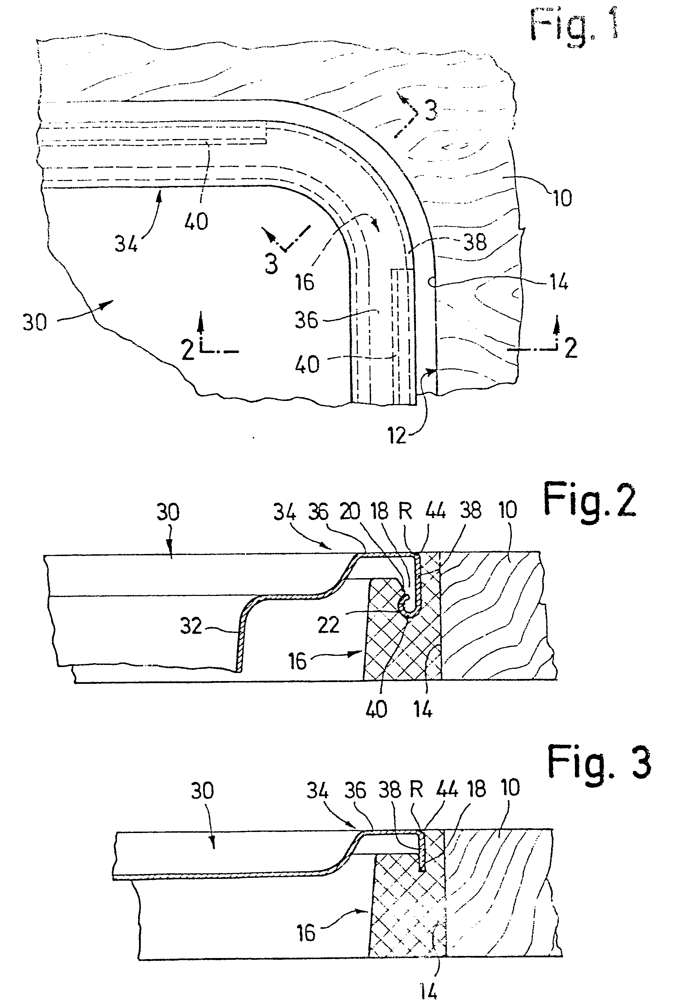

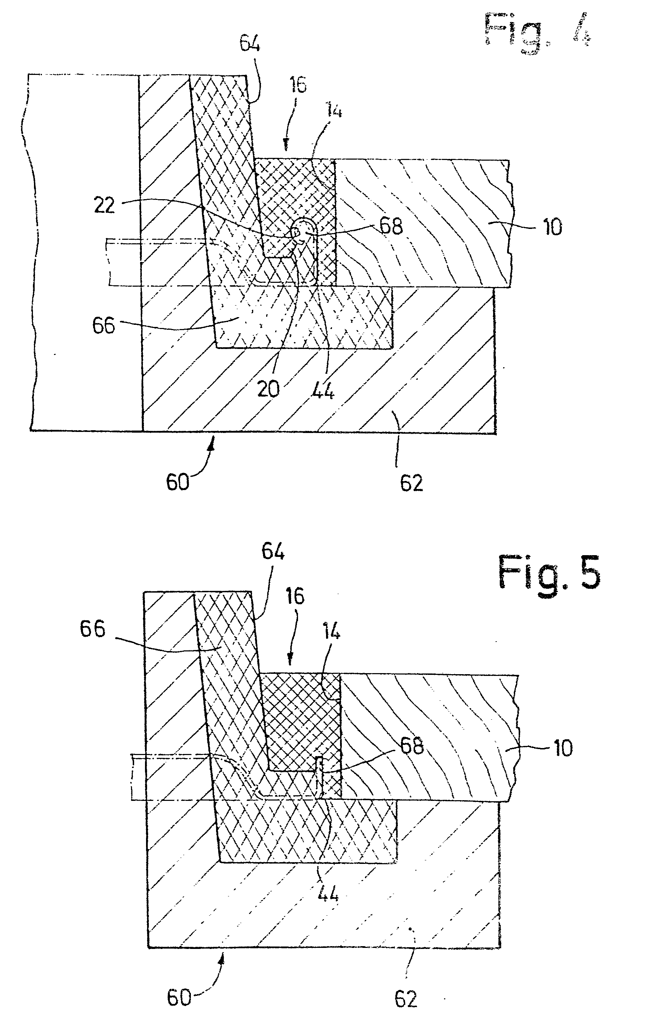

Die Fig. 1 bis 3 zeigen eine Tischplatte 10, welche einen zum Beispiel ungefähr rechteckigen Ausschnitt 12 aufweist. Die in die Tischplatte selbst eingearbeitete Ausschnittkante wurde mit 14 bezeichnet. An dieser Ausschnittkante haftet ein als Ganzes mit 16 bezeichneter, als Leiste ausgebildeter Rahmen, welcher im Bereich der Ecken des Ausschnitts 12 das in Fig. 3 und dazwischen das in Fig. 2 gezeigte Profil aufweist. Er besteht aus einem Polyurethanschaum mit einer Härte zwischen ca. 40 und 70 Shore-A und weist eine umlaufende, nach oben offene Rinne 18 auf, deren Boden eine Stützfläche bildet und die zwischen den Ecken des Ausschnitts 12 eine von einer Nase 20 erzeugte Hinterschneidung 22 besitzt, und zwar in der von der Ausschnittkante 14 abgewandten Seitenwand der Rinne 18. Im Bereich der Ecken des Ausschnitts 12 weist die Rinne 18 jedoch ein einfaches Rechteckprofil auf, wie dies die Fig. 3 erkennen läßt.

Von der als Ganzes mit 30 bezeichneten Einbauspüle sind lediglich ein Teil eines Beckens 32 sowie eines umlaufenden Rands 34 dargestellt. Dieser Rand bildet eine horizontal verlaufende Oberflächenpartie 36 und eine vertikal verlaufende Stützpartie 38, die zwischen den Ecken der Einbauspüle 30 bei 40 eingerollt ist, wie dies die Fig. 2 zeigt. Diese Einrollung bildet einen nach innen gerichteten Vorsprung, der in der Hinterschneidung 22 der Rinne 18 einrastet. Am Übergang zwischen Oberflächenpartie 36 und Stützpartie 38 besitzt der Rand 34 eine Rundung R, welche von einer an den Rahmen 16 angeformten elastischen Lippe 44 übergriffen wird.

Wie die Fig. 2 und 3 deutlich erkennen lassen, sind die Oberflächen der Oberflächenpartie 36, des Rahmens 16 und der Tischplatte 10 miteinander bündig, d. h. es befindet sich nirgends eine Stoßstelle oder Stufe oder eine nennenswerte Fuge, so daß sich die Tischplatte besonders leicht und gut säubern läßt, indem sie einfach in Richtung auf das Becken 32 feucht abgewischt wird. Für eine gute Abdichtung zwischen Einbauspüle 30 und Tischplatte 10 sorgen die an den Rahmen 16 angeformte Lippe 44 sowie der Umstand, daß die Stützpartie 38 des Einbauspülenrands 34 am Grund der Rinne 18 ringsum aufliegt und infolgedessen dort zuverlässig abdichtet.

Die Tischplatte 10 besteht mindestens im wesentlichen üblicherweise aus einem Holzwerkstoff, insbesondere einer Preßspanplatte, deren Oberseite u. U. mit einer dünnen Kunststoffplatte beschichtet ist. Durch das noch zu beschreibende Angießen des Rahmens 16 an die Ausschnittkante 14 der Tischplatte 10 wird die Schnittkante der Holzwerkstoffschicht der Tischplatte versiegelt, so daß in sie keine Feuchtigkeit eindrigen kann.

Die Fig. 2 läßt auch deutlich erkennen, daß sich die Einbauspüle 30 dank der von der Nase 20 und der Einrollung 40 gebildeten, beim Einsetzen und Ausbauen wirksamen Aufgleitflächen leicht in den Ausschnitt 12 einsetzen und aus diesem wieder ausbauen läßt, ohne daß dabei irgendetwas zerstört wird. Es ist hierzu lediglich erforderlich, daß die die Nase 20 bildende Partie des Rahmens 16 hinreichend elastisch ist, was durch die Verwendung des bevorzugten Materials Polyurethanschaum gewährleistet wird.

Anhand der Fig. 4 und 5 soll nun das erfindungsgemäße Herstellungsverfahren für das Angießen des Rahmens 16 an die Ausschnittkante 14 der Tischplatte 10 erläutert werden. Zu diesem Zweck ist eine Form 60 vorgesehen, die in den Ausschnitt 12 der Tischplatte 10 so eingesetzt wird, wie dies die Fig. 4 und 5 erkennen lassen. Die Form besteht aus einem Träger 62 und einem eine Formraumwand 64 bildenden Formeinsatz 66 aus einem Silikonkautschuk. Der Formeinsatz bildet einen umlaufenden Steg 68, dessen Profil an allen Stellen demjenigen der Rinne 18 entspricht.

Bei der Durchführung des erfindungsgemäßen Verfahrens wird also die Tischplatte 10 mit ihrer Oberseite auf die Form 60 aufgelegt, worauf der Raum zwischen der Ausschnittkante 14 und der Formraumwand 64 mit Polyurethanschaum ausgegossen wird, der die Ausschnittkante 14 versiegelt und nach dem Aushärten fest an dieser haftet. Dank der Trenneigenschaften des für den Formeinsatz 66 verwendeten Silikonkautschuks sowie der Elastizität dieses Materials und des für den Rahmen 16 verwendeten Polyurethanschaums läßt sich die Tischplatte 10 samt angeformtem Rahmen 16 anschließend leicht ausformen.

Nur der Vollständigkeit halber sei erwähnt, daß die spätere Lage des Rands 34 der Einbauspüle 30 in den Fig. 4 und 5 strichpunktiert angedeutet wurde.

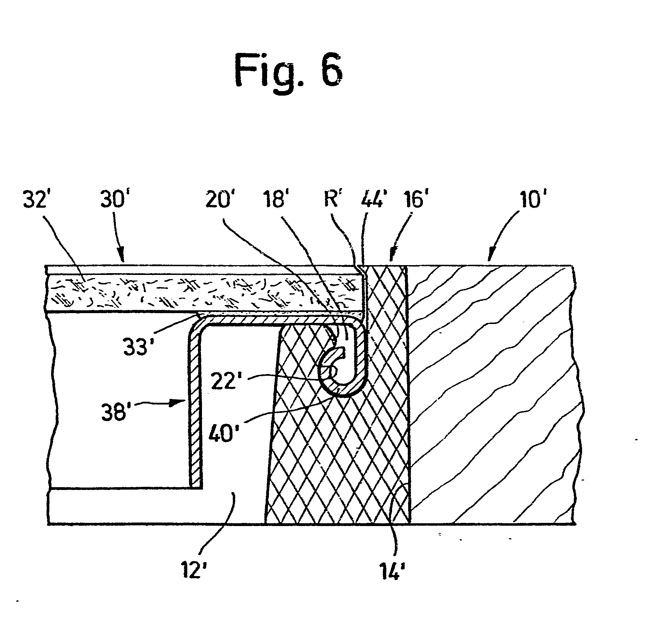

Die Fig. 6 zeigt einen Randbereich einer in einen Ausschnitt 12' einer Tischplatte 10' eingesetzten Glaskeramik-Herdmulde 30', wobei für dem ersten Ausführungsbeispiel nach den Fig. 1 bis 3 entsprechende Teile dieselben Bezugszeichen wie in den Fig. 1 bis 3, jedoch unter Hinzufügen eines Strichs, verwendet wurden, so daß im folgenden nur noch die Abweichungen des zweiten Ausführungsbeispiels vom ersten beschrieben werden.

Die Herdmulde 30' weist eine Glaskeramikplatte 32' auf, an deren Randbereich unten ein Stützrahmen 38' mittels eines Klebers 33' befestigt ist. Dieser Stützrahmen besteht vorzugsweise aus Edelstahlblech und besitzt ein umgekehrt U-förmiges Profil, dessen äußerer Schenkel eine Einrollung 40' aufweist, welche hinter der Nase 20' des Rahmens 16' einrastet.

Der Rand der Platte 32' ist wieder mit einer Rundung R', einer gebrochenen Kante oder dergleichen versehen, welche von einer elastischen Lippe 44' des Rahmens 16' übergriffen wird.

## Patentansprüche

1. Einrichtungseinheit aus einer Platte (10) und einem Einbauelement (30) wie einer Einbauspüle, einer Herdmulde oder dergleichen, wobei die Platte einen der Form des Einbauelements angepaßten Ausschnitt (2) aufweist, in den das Einbauelement einsetzbar ist, mit einer am Ausschnittrand (14) mittels eines gießbaren Kunststoffs befestigten Leiste (16), welche eine der Plattenoberseite zugewandte Stützfläche aufweist, sowie mit an dem Rand des Einbauelements angebrachten Stützen (38), mit denen das Einbauelement von oben auf die Stützfläche aufsetzbar ist, dadurch gekennzeichnet, daß die Leiste (16) samt Stützfläche aus einem gießbaren und in situ sich durch eine Polyreaktion verfestigenden Kunststoff gefertigt und durch diesen Kunststoff mit dem Ausschnittrand (14) verklebt ist.

2. Einrichtungseinheit nach Anspruch 1, dadurch gekennzeichnet, daß die Leiste einen um den Ausschnittrand (14) umlaufenden, einteiligen Rahmen (16) bildet.

3. Einrichtungseinheit nach Anspruch 1 oder 2, dadurch gekennzeichnet, daß die Leiste (16) ausschließlich aus einem gießbaren Kunststoff besteht.

4. Einrichtungseinheit nach Anspruch 2, dadurch gekennzeichnet, daß der Rahmen (16) ein einteiliges Gußstück ist.

5. Einrichtungseinheit nach Anspruch 2, dadurch gekennzeichnet, daß der Rahmen (16) aus einem Polyurethanschaum besteht.

6. Einrichtungseinheit nach Anspruch 1, deren Leiste (16) eine Seitenwand mit einer Hinterschneidung (22) zum Einrasten des Einbauelements (30) aufweist, dadurch gekennzeichnet, daß die Leiste (16) aus einem derart elastischen Kunststoff gefertigt ist, daß die Hinterschneidung (22) beim Einsetzen des Einbauelements (30) elastisch nachgiebig ist.

7. Einrichtungseinheit nach Anspruch 6, wobei das Einbauelement (30) am Rand seiner Oberseite mit einem Radius versehen ist, dadurch gekennzeichnet, daß die Leiste (16) eine elastische, die von dem Radius gebildete Rundung übergreifende Lippe (44) aufweist.

8. Einrichtungseinheit nach Anspruch 6, wobei die Leiste (16) eine zur Plattenoberseite offene Rinne (18) aufweist, deren Boden die Stützfläche bildet, dadurch gekennzeichnet, daß die Rinne (18) auf ihrer vom Ausschnittrand (14) abgekehrten Seite mit einer die elastisch nachgiebige Hinterschneidung (22) aufweisenden Seitenwand versehen ist und die Stützen (38) des Einbauelements (30) mit in Richtung auf das Ausschnittinnere vorspringenden, unter der Hinterschneidung einrastbaren Vorsprüngen (40) versehen sind.

9. Einrichtungseinheit nach Anspruch 8, wobei der Rand (34) des Einbauelements (30) nach unten abgewinkelt ist und die Stützen (38) bildet, dadurch gekennzeichnet, daß die Stützen (38) im Bereich der Einbauelementecken glatt ausgebildet und dazwischen zur Bildung der Vorsprünge (40) an ihrem freien Rand eingerollt sind, und daß die Rinne (18) der Leiste (16) im Bereich der Ausschnittecken einen einfachen U-Querschnitt aufweist.

10. Verfahren zur Herstellung der Einrichtungseinheit nach einem oder mehreren der vorstehenden Ansprüche, dadurch gekennzeichnet, daß an die Platte (10) im Bereich des Ausschnittrands (14) eine Form (62, 66) angesetzt wird, deren Formraum der Leistenform entsprechend gestaltet ist, und daß die Leiste (16) mit einem Kunststoff an den Ausschnittrand angegossen wird.

11. Verfahren nach Anspruch 10, dadurch gekennzeichnet, daß für die Wand (64) des Formraums ein Werkstoff verwendet wird, welcher bezüglich des Leistenkunststoffs selbsttrennend ist.

12. Verfahren nach Anspruch 11, dadurch gekennzeichnet, daß für die Wand (64) des Formraums ein elastischer Werkstoff, insbesondere ein Silikonkautschuk, verwendet wird.

## Claims

1. Furniture unit consisting of a plate (10) and a built-in unit (30) such as a built-in sink unit, a cooker recess or the like, the plate having a cutaway portion (2) adapted to the shape of the built-in element, in which cutaway portion (2) the built-in element may be inserted, with a strip (16) which is secured to the edge (14) of the cutaway portion by means of a mouldable plastics material and comprises a supporting surface facing the upper side of the plate, as well as with supports (38) which are fitted at the edge of the built-in element and by means of which the built-in element may be placed from above onto the supporting surface, characterized in that the strip (16) together with the supporting surface is prepared from a mouldable plastics material, which sets in situ as a result of a polyreaction, and is adhered to the edge (14) of the cutaway portion by this plastics material.

2. Furniture unit according to claim 1, characterized in that the strip forms a one-part frame (16) which surrounds the edge (14) of the cutaway portion.

3. Furniture unit according to claim 1 or 2, characterized in that the strip (16) consists exclusively of a mouldable plastics material.

4. Furniture unit according to claim 2, characterized in that the frame (16) is a one-part moulded piece.

5. Furniture unit according to claim 2, characterized in that the frame (16) consists of a polyurethane foam.

6. Furniture unit according to claim 1, the strip (16) of which comprises a lateral wall with an undercut (22) for engaging the built-in unit (30), characterized in that the strip (16) is made from a resilient plastics material such that the undercut (22) yields resiliently when the built-in element (30) is inserted.

7. Furniture unit according to claim 6, the built-in element (30) being provided with a radius at the edge of its upper side, characterized in that the strip (16) has a resilient lip (44) engaging over the rounding formed by the radius.

8. Furniture unit according to claim 6, the strip (16) comprising a groove (18) which is open towards the upper side of the plate and the base of which forms the supporting surface, characterized in that on its side facing away from the edge (14) of the cutaway portion the groove (18) is provided with a lateral wall comprising the resiliently yielding undercut (22) and the supports (38) of the built-in element (30) are provided with projections (40) which project in the direction of the interior of the cutaway portion and may engage below the undercut.

9. Furniture unit according to claim 8, the edge (34) of the built-in element (30) being bent downwardly and forming the supports (38), characterized in that the supports (38) are smooth in the region of the corners of the built-in element and are rolled in between the latter at their free edge to form the projections (40), and in that the groove (18) of the strip (16) comprises a simple U-shaped cross-section in the region of the corners of the cutaway portion.

10. Method for the production of the furniture unit according to one or more of the preceding claims, characterized in that a mould (62, 66) is placed on the plate (10) in the region of the edge (14) of the cutaway portion, the moulding space of the mould (62, 66) being shaped so as to correspond to the shape of the strip, and in that the strip (16) is moulded to the edge of the cutaway section with a plastics material.

11. Method according to claim 10, characterized in that a material is used for the wall (64) of the moulding space, which material is self-separating with respect to the plastics material of the strip.

12. Method according to claim 11, characterized in that a resilient material, in particular a silicone rubber, is used for the wall (64) of the moulding space.

## Revendications

1. Unité d'aménagement composée d'un plaque (10) et d'un élément encastrable (30), tel qu'un évier encastrable, une cuvette pour cuisinière ou des éléments analogues, dans laquelle la plaque présente une ouverture (12) qui est adaptée à la forme de l'élément encastrable et dans laquelle l'élément encastrable peut être introduit, avec une latte (16) qui est fixée sur le bord (14) de l'ouverture au moyen d'une substance synthétique coulable et qui présente une surface de support orientée vers la face supérieure de la plaque, ainsi qu'avec des supports (38) qui sont agencés sur le bord de l'élément encastrable et avec lesquels l'élément encastrable peut être monté à partir du haut sur la surface de support, caractérisée en ce que la latte (16) est fabriquée conjointement avec la surface d'appui à partir d'une substance synthétique coulable qui se solidifie in situ par une polyréaction et en ce qu'elle est collée au bord (14) de l'ouverture grâce à cette substance synthétique.

2. Unité d'aménagement suivant la revendication 1, caractérisée en ce que la latte forme un cadre d'une pièce (16) qui passe le long du bord (14) de l'ouverture.

3. Unité d'aménagement suivant l'une des revendications 1 et 2, caractérisée en ce que la latte (16) est exclusivement constituée d'une substance synthétique coulable.

4. Unité d'aménagement suivant la revendication 2, caractérisée en ce que le cadre (16) est une pièce coulée, d'une pièce.

5. Unité d'aménagement suivant la revendication 2, caractérisée en ce que le cadre (16) est constitué d'une mousse de polyuréthanne.

6. Unité d'aménagement suivant la revendication 1, dont la latte (16) présente une paroi latérale pourvue d'une contre-dépouille (22) pour l'encliquetage de l'élément encastrable (30), caractérisée en ce que la latte (16) est fabriquée à partir d'une substance synthétique élastique de telle façon que la contre-dépouille (22) soit élastiquement flexible lors de l'introduction de l'élément encastrable (30).

7. Unité d'aménagement suivant la revendication 6, dans laquelle l'élément encastrable (30) est pourvu d'un arrondi sur le bord de sa face supérieure, caractérisée en ce que la latte (16) présente une lèvre (44) élastique qui recouvre la courbure formée par l'arrondi.

8. Unité d'aménagement suivant la revendication 6, dans laquelle la latte (16) présente une rainure (18) qui est ouverte vers la face supérieure de la plaque et dont le fond forme la surface de support, caractérisée en ce que la rainure (18) est, sur son côté opposé au bord (14) de l'ouverture, pourvue d'une paroi latérale présentant la contre-dépouille (22) élastiquement flexible et en ce que les supports (38) de l'élément encastrable (30) sont pourvus de saillies (40) qui s'étendent en direction de l'intérieur de l'ouverture et qui sont encliquetables sous la contre-dépouille.

9. Unité d'aménagement suivant la revendication 8, dans laquelle le bord (34) de l'élément encastrable (30) est plié vers le bas et forme les supports (38), caractérisée en ce que les supports (38) sont réalisés sous une forme lisse dans la zone des coins de l'élément encastrable et en ce qu'entre ces derniers ils sont enroulés sur leur bord libre, pour réaliser les saillies (40), et en ce que la rainure (18) de la latte (16) présente une section transversale de simple U dans la zone des coins de l'ouverture.

10. Procédé de préparation de l'unité d'aménagement suivant une ou plusieurs des revendications précédentes, caractérisé en ce qu'un moule (62, 66) dont le volume es façonné d'une manière correspondant à la forme des lattes est mis en place sur la plaque (10) dans la zone du bord (14) de l'ouverture et en ce que la latte (16) est coulée sur le bord de l'ouverture avec une substance synthétique.

11. Procédé suivant la revendication 10, caractérisé en ce qu'un matériau qui se sépare spontanément par rapport à la substance synthétique de la latte est utilisé pour la paroi (64) du volume du moule.

12. Procédé suivant la revendication 11, caractérisé en ce qu'un matériau élastique, en particulier un caoutchouc de silicone, est utilisé pour la paroi (64) du volume du moule.

Fig. 1

Fig. 2

Fig. 3

Fig. 4

Fig. 5

# Fig. 6